# DEMANDE DE BREVET EUROPEEN

(11) **EP 1 386 787 A2**
(43) Date de publication de la demande: **04.02.2004**
(21) Numéro de dépôt: 03291762.7
(22) Date de dépôt: 16.07.2003
(51) Int. Cl.: B60R 13/08

(54) **Panneau insonorisant comprenant des plots de fixation integres**

(30) Priorité: 26.07.2002 FR 0209537
(71) Demandeur: Centre d'Etude et de Recherche pour l'Automobile ( CERA), 51100 Reims (FR)
(72) Inventeur: Bonhomme, Patrick, 51500 Taissy (FR)
(74) Mandataire: Geismar, Thierry

(57) **Abrégé**

L'invention concerne un panneau insonorisant (1) du type comprenant une couche de matériau thermoplastique (2), ledit panneau (1) étant destiné à être monté entre un premier (4) et un deuxième élément (5) rigides, ladite couche de matériau thermoplastique (2) intégrant au moins un plot de fixation (6), ledit panneau (1) étant caractérisé en ce que le plot de fixation (6) est pourvu :
- d'un moyen d'association (7) du premier élément (4), destiné à coopérer avec un organe complémentaire d'association (8) prévu sur ledit premier élément (4) et,
- d'un moyen d'ancrage (9) au deuxième élément (5), destiné à coopérer avec un organe complémentaire d'ancrage (10) prévu sur ledit deuxième élément (5),
de sorte à permettre la fixation, après montage du panneau (1) sur le deuxième élément (5), du premier élément (4) sur le deuxième élément (5) par l'intermédiaire du panneau (1).

## Description

L'invention concerne un panneau insonorisant du type comprenant une couche de matériau thermoplastique.

De tels panneaux sont notamment destinés aux véhicules automobiles, où ils sont utilisés pour isoler l'habitacle de l'environnement extérieur. En particulier, ils peuvent être fixés sur le tablier du véhicule automobile, pour atténuer le bruit occasionné à l'intérieur de l'habitacle par le moteur. Dans ce cas, la planche de bord vient généralement recouvrir au moins la partie supérieure du panneau.

Ces panneaux sont actuellement réalisés sous la forme d'une plaque massive en matière plastique de densité élevée, appelée masse lourde, associée à un support faisant office de ressort, tel qu'une couche de mousse.

L'ensemble constitué par la masse lourde et le ressort favorise, de par sa structure, l'amortissement des vibrations et présente par conséquent des propriétés d'isolation acoustique intéressantes.

Dans l'application considérée, le panneau insonorisant est disposé entre le tablier et la planche de bord, sa présence permettant d'amortir les vibrations du tablier et par conséquent de réduire le bruit occasionné par le moteur.

Pour ce faire, la planche de bord et le panneau doivent être fixés sur le tablier, le panneau insonorisant étant interposé entre les deux. A cet effet, il est connu de prévoir sur la surface de la planche de bord des pattes de fixation destinées à coopérer avec des supports métalliques situés sur la tôle du tablier, des ouvertures étant réalisées dans le panneau insonorisant de sorte à permettre le passage des éléments de fixation.

Ainsi, lors de la fixation de la planche de bord sur le tablier, le panneau est immobilisé entre ces deux éléments.

Ce mode de fixation de la planche de bord et du panneau sur le tablier présente plusieurs inconvénients.

Tout d'abord, les supports métalliques prévus sur la tôle, de par leur forme, ne peuvent y être directement intégrés. Il s'agit donc d'éléments rapportés, dont la présence et le montage induisent un surcoût important.

En outre, la présence d'ouvertures dans le panneau insonorisant diminue la performance globale d'isolation acoustique du panneau.

Par ailleurs, le fait que la planche de bord soit en contact direct avec la tôle par l'intermédiaire des pattes de fixation a pour effet de transmettre les vibrations du moteur et d'occasionner du bruit dans l'habitacle, ce qui va à l'encontre de l'effet voulu.

Pour pallier ces inconvénients, l'invention propose un panneau insonorisant comprenant des plots de fixation, chaque plot étant agencé pour permettre à la fois la fixation de la planche de bord sur le panneau, et l'ancrage du panneau au tablier, et ce sans que la planche de bord et la tôle ne soient en contact direct.

La présence de ces plots permet d'éviter la formation d'ouvertures dans le panneau insonorisant, ainsi que la présence de pièces de fixation rapportées.

En outre, ces plots présentent l'avantage d'être intégrés dans la masse lourde, ce qui est facilement réalisable notamment par moulage dudit panneau.

A cet effet, et selon un premier aspect, l'invention propose un panneau insonorisant du type comprenant une couche de matériau thermoplastique, ledit panneau étant destiné à être monté entre un premier et un deuxième élément rigides, ladite couche de matériau thermoplastique intégrant au moins un plot de fixation, ledit plot de fixation étant pourvu :
- d'un moyen d'association du premier élément, destiné à coopérer avec un organe complémentaire d'association prévu sur ledit premier élément et,
- d'un moyen d'ancrage au deuxième élément, destiné à coopérer avec un organe complémentaire d'ancrage prévu sur ledit deuxième élément, de sorte à permettre la fixation, après montage du panneau sur le deuxième élément, du premier élément sur le deuxième élément par l'intermédiaire du panneau.

Selon un mode de réalisation, le moyen d'association comprend un logement destiné à recevoir l'organe d'association, et le moyen d'ancrage comprend un socle destiné à être inséré dans l'organe d'ancrage.

D'autres objets et avantages de l'invention apparaîtront au cours de la description qui suit, faite en référence aux dessins annexés dans lesquels :
- la figure 1 est une vue en coupe longitudinale du panneau suivant un plan coupant le plot de fixation, le panneau étant monté sur le deuxième élément qui est également représenté en coupe ;
- la figure 2 est une vue suivant la coupe II-II de la figure 1, l'organe d'association étant inséré dans le moyen d'association.

Le panneau insonorisant 1 selon l'invention comprend une couche de matériau thermoplastique 2 formant la masse lourde.

Selon une réalisation, cette couche de matériau thermoplastique 2 est formée d'EPDM (éthylène propylène diène monomère), et comprend une charge minérale telle que du sulfate de baryum, du carbonate de calcium et/ou de l'hydroxyde de baryum.

Les proportions respectives de ces composants peuvent être les suivantes :
- entre environ 10 et 50% en poids d'EPDM,
- entre environ 90 et 50% en poids de charge minérale.

Ce type de matériau est particulièrement performant dans le cadre d'une utilisation comme isolant acoustique.

En outre, une couche de mousse 3, par exemple de type polyuréthanne, faisant office de ressort, peut être associée par tout moyen connu sur une surface de la couche de matériau thermoplastique 2.

Ce panneau insonorisant 1 est destiné à être monté entre un premier 4 et un deuxième 5 élément rigides. Dans la description qui suit, le premier élément 4 est formé par une planche de bord, et le deuxième élément 5 est formé par un tablier de véhicule automobile.

La planche de bord 4 est typiquement placée sur la partie supérieure de l'une des faces du panneau 1, de telle sorte que la partie inférieure de cette face demeure visible depuis l'habitacle. On peut alors prévoir d'habiller cette partie inférieure d'une couche de revêtement de finition, telle qu'une moquette.

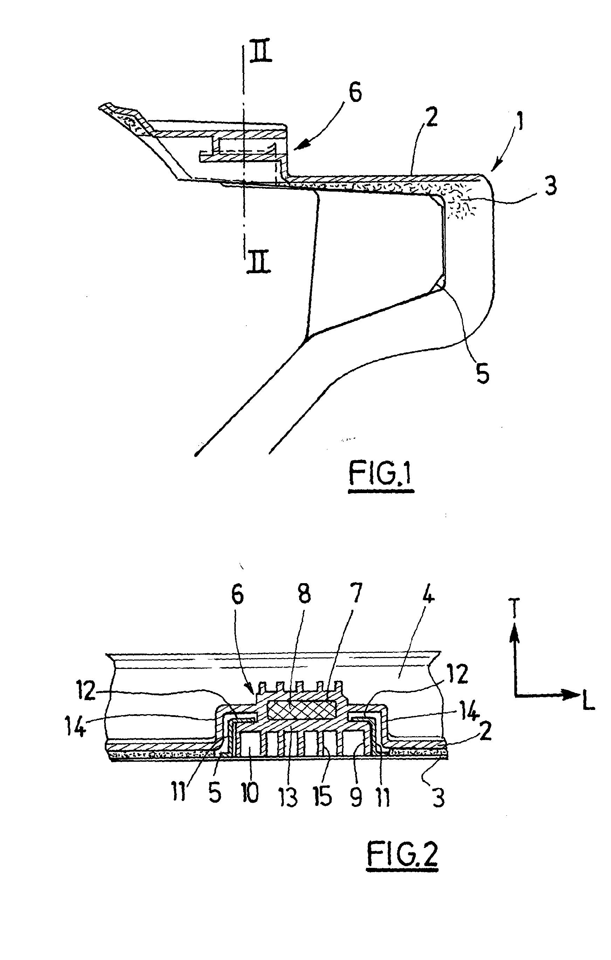

Pour permettre le montage et la fixation du panneau 1 entre les deux éléments rigides 4, 5, ledit panneau 1 comprend des plots de fixation 6, tels que représentés sur les figures 1 et 2 selon un mode de réalisation.

Ces plots de fixation 6 présentent l'avantage d'être directement intégrés au panneau 1.

En effet, le procédé de réalisation d'un tel panneau 1 comprend typiquement une étape de moulage de la couche de matériau thermoplastique 2. Le fait de mouler le matériau thermoplastique présente notamment l'avantage de pouvoir contrôler et moduler l'épaisseur de ladite couche 2 tout en permettant d'intégrer les plots de fixation 6 d'une seule pièce avec le panneau 1.

Ces plots de fixation 6 sont répartis de façon discrète le long de la surface de la couche de matériau thermoplastique 2, et sont prévus en nombre suffisant pour permettre une fixation fiable de la planche de bord 4 et du panneau 1 sur le tablier 5.

Chaque plot 6 est pourvu :
- d'un moyen d'association 7 de la planche de bord 4, destiné à coopérer avec un organe complémentaire d'association 8 prévu sur ladite planche de bord 4 et,
- d'un moyen d'ancrage 9 au tablier 5, destiné à coopérer avec un organe complémentaire d'ancrage 10 prévu sur ledit tablier 5.

Ainsi, chaque plot de fixation 6 est agencé pour permettre à la fois l'association de la planche de bord 4 et l'ancrage sur le tablier 5 de l'ensemble formé par la planche de bord 4 et le panneau 1.

Le nombre et le positionnement respectif des organes d'association 8 sur la planche de bord 4 et des organes d'ancrage 10 sur le tablier 5 est par conséquent identique à ceux des plots de fixation 6 prévus sur le panneau 1, de sorte à permettre la fixation, après montage du panneau 1 sur le tablier 5, de la planche de bord 4 sur le tablier 5 par l'intermédiaire du panneau 1.

On décrit à présent, en relation avec le mode de réalisation représenté sur les figures 1 et 2, la structure d'un plot de fixation 6 ainsi que des organes 8, 10 correspondants.

Dans la description qui suit, les termes « longitudinal » et « transversal» font référence respectivement aux directions « L » et « T » indiquées sur la figure 2.

Le moyen d'association 7 comprend un logement destiné à recevoir l'organe d'association 8 prévu sur la planche de bord 4. Ce logement 7 est de type borgne, c'est-à-dire qu'il n'est ouvert que du côté destiné à l'introduction de l'organe d'association 8.

En outre, il est de forme oblongue, de sorte à pouvoir recevoir et retenir un organe d'association 8 tel qu'une patte de forme complémentaire prévue sur la planche de bord 4.

Le moyen d'ancrage 9 comprend un socle destiné à être inséré dans l'organe d'ancrage 10. Ce socle 9 est sensiblement en forme de U renversé, sa forme et sa taille étant agencées pour coopérer avec l'organe complémentaire d'ancrage 10 prévu sur le tablier.

A cet effet, l'organe d'ancrage 10 est formé d'une cavité ouverte dont les parois sont délimitées par deux décrochements symétriques 11 s'étendant perpendiculairement par rapport au plan du tablier 5, et dont les extrémités respectives 12 s'étendent parallèlement par rapport audit plan, vers l'intérieur de la cavité 10, de sorte à former les bords de ladite cavité 10 en laissant un espace suffisant pour permettre l'introduction du socle 9.

En particulier, dans le mode de réalisation représenté, la périphérie de la paroi longitudinale 13 du socle 9 est destinée à venir s'engager sous lesdits bords 12, de sorte à assurer un maintien ferme du socle 9 dans la cavité 10.

La cavité 10 présente l'avantage de pouvoir être directement réalisée dans la tôle du tablier 5, notamment par travail de la tôle.

La partie centrale de la paroi longitudinale 13 forme également la paroi longitudinale inférieure du logement 7, de telle sorte que ledit logement 7 est disposé en regard de la cavité 10, et centré par rapport au socle 9. En outre, le logement 7 est saillant par rapport au plan de la couche de matériau thermoplastique.

Le plot de fixation 6 est par conséquent centré dans la cavité 10. Il y est inséré par coulissement, et la géométrie de la cavité 10 est agencée pour permettre son blocage.

Cette réalisation, en interposant une paroi 13 du panneau 1 entre l'organe d'association 8 et l'organe d'ancrage 10, permet un découplage des vibrations occasionnées par le moteur et transmises au tablier, de sorte à améliorer les performances d'isolation acoustique obtenues.

En outre, le plot 6 est associé à la couche de matériau thermoplastique 2 sensiblement au niveau d'un plan médian longitudinal du logement 7. A cet effet, il est prévu, dans la couche de matériau thermoplastique 2, deux décrochements symétriques 14 disposés de part et d'autre du logement 7.

Cet agencement permet d'utiliser les propriétés de la couche de matériau thermoplastique 2 pour exercer un effort contre les parois du logement 7, et contribuer ainsi à la rigidification dudit logement 7 lorsque la patte correspondante 8 prévue sur la planche de bord 4 lui est associée.

De plus, le socle 9 comprend des nervures transversales de renfort 15 qui s'étendent à partir de la paroi longitudinale 13 dudit socle 9 et à l'opposé du logement 7 de sorte à assurer un ancrage stable du plot de fixation 6 sur le tablier 5, une fois que la patte 8 prévue sur la planche de bord 4 est associée dans le logement 7 correspondant.

Par ailleurs, dans le mode de réalisation représenté, la couche de mousse 3 est prévue entre la couche de matériau thermoplastique 2 et le tablier 5, et s'arrête à une certaine distance du plot de fixation 6, de sorte à ne pas l'enrober. Cette réalisation permet de préserver l'espace nécessaire pour l'insertion et l'ancrage du plot de fixation 6 sur le tablier 5.

Dans une variante, non représentée, on peut cependant prévoir que le plot de fixation 6 soit au moins partiellement enrobé dans la mousse 3.

## Revendications

1. Panneau insonorisant (1) du type comprenant une couche de matériau thermoplastique (2), ledit panneau (1) étant destiné à être monté entre un premier (4) et un deuxième élément (5) rigides, ladite couche de matériau thermoplastique (2) intégrant au moins un plot de fixation (6), ledit panneau (1) étant **caractérisé en ce que** le plot de fixation (6) est pourvu :
- d'un moyen d'association (7) du premier élément (4), destiné à coopérer avec un organe complémentaire d'association (8) prévu sur ledit premier élément (4) et,
- d'un moyen d'ancrage (9) au deuxième élément (5), destiné à coopérer avec un organe complémentaire d'ancrage (10) prévu sur ledit deuxième élément (5),
de sorte à permettre la fixation, après montage du panneau (1) sur le deuxième élément (5), du premier élément (4) sur le deuxième élément (5) par l'intermédiaire du panneau (1).

2. Panneau selon la revendication 1, **caractérisé en ce que** le moyen d'association (7) comprend un logement destiné à recevoir l'organe d'association (8), et le moyen d'ancrage (9) comprend un socle destiné à être inséré dans l'organe d'ancrage (10).

3. Panneau selon la revendication 2, **caractérisé en ce que** le socle (9) est sensiblement en forme de U renversé, la périphérie de la paroi longitudinale (13) dudit socle (9) étant destinée à venir s'engager sous les bords (12) d'une cavité ouverte (10) formant organe d'ancrage.

4. Panneau selon la revendication 2 ou 3, **caractérisé en ce que** le socle (9) comprend des nervures transversales de renfort (15) qui s'étendent à partir de la paroi longitudinale (13) et à l'opposé du logement (7).

5. Panneau selon l'une quelconque des revendications 2 à 4, **caractérisé en ce que** la partie centrale de la paroi longitudinale (13) du socle (9) forme la paroi longitudinale inférieure du logement (7), ledit logement (7) étant saillant par rapport au plan de la couche de matériau thermoplastique (2).

6. Panneau selon l'une quelconque des revendications 2 à 5, **caractérisé en ce que** le logement (7) est borgne.

7. Panneau selon l'une quelconque des revendications 2 à 6, **caractérisé en ce que** le plot (6) est associé à la couche de matériau thermoplastique (2) sensiblement au niveau d'un plan médian longitudinal du logement (7).

8. Panneau selon l'une quelconque des revendications 1 à 7, **caractérisé en ce que** la couche de matériau thermoplastique (2) est chargée, et comprend :
- entre environ 10 et 50% en poids d'EPDM ;
- entre environ 90 et 50% en poids de charge minérale.

9. Panneau selon l'une quelconque des revendications 1 à 8, **caractérisé en ce que** la couche de matériau thermoplastique (2) est associée à une couche faisant office de ressort, par exemple formée d'une couche de mousse (3) de type polyuréthanne.

10. Panneau selon l'une quelconque des revendications 1 à 9, **caractérisé en ce qu'**il est habillé au moins partiellement d'une couche de revêtement de finition sur au moins l'une de ses faces.
